# EUROPÄISCHE PATENTANMELDUNG

(11) **EP 1 088 684 A2**
(43) Veröffentlichungstag der Anmeldung: **04.04.2001**
(21) Anmeldenummer: 00120963.4
(22) Anmeldetag: 27.09.2000
(51) Int. Cl.: B60B 7/00

(54) **Nabenabdeckung für eine Radlagerung, vorzugsweise für eine Nutzfahrzeug-Radlagerung**

(30) Priorität: 30.09.1999 DE 19946923
(71) Anmelder: BPW Bergische Achsen Kommanditgesellschaft, 51674 Wiehl (DE)
(72) Erfinder: Leidig, Hans-Josef, 51580 Reichshof (DE); Lang, Karl-Rainer, 51588 Nümbrecht (DE)
(74) Vertreter: Stenger, Watzke & Ring Patentanwälte

(57) **Zusammenfassung**

Vorgeschlagen wird eine Nabenabdeckung für eine Radlagerung, vorzugsweise für eine Nutzfahrzeug-Radlagerung, mit einer das offene Ende der Radnabe (5) sowie das Ende des Achsschenkels (1) mit der darauf befestigten zentralen Achsmutter (3) nach außen hin abdeckenden und hierzu an einem umlaufenden Bund (6) der Radnabe (5) durch Drehen befestigten Kappe (7). Um eine einfach und sicher zu montierende Nabenabdeckung zu schaffen, ist die Kappe (7) mittels einer Bajonettverbindung (9, 11) an dem umlaufenden Bund (6) der Radnabe (5) befestigt. Vorzugsweise ist außerdem eine sich einerseits an dem Bund (6) und andererseits an der Kappe (7) abstützende Dichtung (17) aus elastischem Material vorhanden. Die Dichtung (17) kann in Folge ihrer elastischen Rückformkraft dazu dienen, die Bajonettverbindung (9, 11) gegen ein ungewolltes Lösen zu sichern.

## Beschreibung

Die Erfindung betrifft eine Nabenabdeckung für eine Radlagerung, vorzugsweise für eine Nutzfahrzeug-Radlagerung, mit einer das offene Ende der Radnabe sowie das Ende des Achsschenkels mit der darauf befestigten Achsmutter nach außen hin abdeckenden und hierzu an einem umlaufenden Bund der Radnabe durch Drehen befestigten Kappe.

Eine solche Nabenabdeckung unter Verwendung einer sogenannten Schraubkapsel ist aus der EP 0 027 201 B1 bekannt. Sie dient einerseits dazu, die äußeren Enden der Radnabe zu verschließen, um das darin auf dem Achsschenkel angeordnete Lager sowie die zentrale Achsmutter zu schützen, andererseits aber auch dazu, an ihrer Stirnwand das Firmenzeichen des Herstellers oder eine andere die Achse individualisierende Kennzeichnung aufzunehmen. Die Befestigung der bekannten Schraubkapsel an dem Bund der Radnabe erfolgt über ein Gewinde. Um das Aufdrehen und Abdrehen der Schraubkapsel zu erleichtern, sind am Umfang Schlüsselflächen sowie zusätzlich nach außen gekrümmte Schlagflächen ausgebildet, die mit den Schlüsselflächen einen stumpfen Winkel bilden. Auf diese Weise können mit einem geeigneten Schlagwerkzeug in Richtung einer Sekante verlaufende Schläge auf die Nabenabdeckung ausgeübt werden, um diese z.B. im Fall eines hartnäckigen Festsitzens auf dem Bund der Radnabe zu lösen.

Eine weiterentwickelte Schlagkapsel ist an ihrem offenen Ende mit einem leicht nach innen gerichteten Bund versehen, der in eine entsprechend gestaltete, umlaufende Nut der Radnabe eingreifen kann, sobald die Schlagkapsel vollständig auf den Bund der Radnabe aufgeschraubt ist. Hiermit wird eine gewisse zusätzliche Sicherung eines unbeabsichtigten Lösens der Schraubkapsel angestrebt. Gleichwohl kann es in der Praxis insbesondere dann, wenn in Folge von Montierfehlern das zur Verfügung stehende Schraubgewinde nicht vollständig ausgenutzt wird, zu einer fehlerhaften Montage kommen, bei der der als Sicherung vorgesehene Formschluß zwischen dem Abschlußbund der Schraubkapsel und der an der Radnabe ausgebildeten Nut nicht erreicht wird. Durch die bei der Fahrt auftretenden Erschütterungen kann es dann zu einem Lösen und Abfallen der Schraubkapsel kommen.

Der Erfindung liegt die **Aufgabe** zugrunde, eine einfach und sicher zu montierende Nabenabdeckung zu schaffen.

Zur **Lösung** dieser Aufgabe wird bei einer Nabenabdeckung der eingangs genannten Art vorgeschlagen, die Kappe mittels einer Bajonettverbindung an dem umlaufenden Bund der Radnabe zu befestigen.

Mit der erfindungsgemäßen Bajonettverbindung wird eine Drehverriegelung erreicht, bei der die Stufen 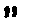 Drehen", d.h. Anziehen, und 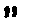 Verriegeln" exakt reproduzierbar sind, so daß Montierfehler durch unvollständiges Aufschrauben der Nabenabdeckung nicht mehr auftreten können.

Vorzugsweise wird die erfindungsgemäße Bajonettverbindung mit einer Dichtung aus elastischem Material kombiniert, die sich einerseits an dem Bund und andererseits an der Kappe abstützt. Gemäß einer bevorzugten Ausgestaltung erstreckt sich die Dichtung axial druckbeaufschlagt zwischen einander zugewandten Flächen des Bundes einerseits und der Kappe andererseits, wobei der axiale Druck durch den Formschluß der Bajonettverbindung aufrechterhalten wird. Auf diese Weise wird der Vorteil einer einfachen und sicheren Montage mit dem Vorteil einer Abdichtung der Nabeneinheit gegen das Eindringen von Schmutz und Feuchtigkeit verbunden.

Gemäß einer besonders vorteilhaften Ausgestaltung der Nabenabdeckung ist die Bajonettverbindung durch die elastische Rückformkraft der axial druckbeaufschlagten Dichtung gegen ein ungewolltes Lösen gesichert. Bei dieser Ausgestaltung übernimmt die Dichtung eine Doppelfunktion. Neben ihrer originären Aufgabe, das Innere der Nabenabdeckung gegen das Eintreten von Schmutz und Feuchtigkeit zu schützen, tritt die zusätzliche Funktion der Bereitstellung einer elastischen Rückformkraft, welche die Bajonettverbindung gegen ein ungewolltes Lösen sichert. Es sind daher keine zusätzlichen Mittel erforderlich, um die Bajonettverbindung in deren Endstellung so zu verriegeln, daß ein Lösen nur entgegen einem zunächst höheren Widerstand möglich ist. Diese Aufgabe wird vielmehr zusätzlich von der Dichtung übernommen, die die hierzu erforderliche elastische Rückformkraft aufweist.

Um ein auch akustisch wahrnehmbares Einrasten nach erfolgtem Schließen der Bajonettverbindung zu erzielen, wird mit einer weiteren Ausgestaltung der Erfindung vorgeschlagen, daß sich die Bajonettverbindung aus einerseits Zapfen und andererseits Führungen für die Zapfen zusammensetzt, und daß sich jede Führung, ausgehend von einer Öffnung, aus einem während der Drehung der Kappe von dem jeweiligen Zapfen durchlaufenen Anzugsabschnitt sowie einem sich daran anschließenden Verriegelungsabschnitt zusammensetzt, der den Zapfen in der Endstellung der Kappe aufnimmt, und daß der Verriegelungsabschnitt gegenüber dem Anzugsabschnitt axial hinterschnitten ist. Sobald beim Anziehen der Kappe der Zapfen den Anzugsabschnitt verläßt und in den demgegenüber als Hinterschnitt gestalteten Verriegelungsabschnitt gelangt, entsteht ein Rastgeräusch, welches als eindeutiges Signal für die ordnungsgemäße Drehverriegelung der Kappe gewertet werden kann. Zudem ist das Einrasten als zusätzlicher Indikator auch an der Kappe spürbar.

Vorzugsweise ist das axiale Maß des Hinterschnitts des Verriegelungsabschnitts gegenüber dem Anzugsabschnitt geringer, als jene axiale Länge, über die sich die Dichtung bei axialer Kompression elastisch verhält. Hierdurch wird der Elastizitätsbereich der sowohl der Abdichtung als auch der Sicherung der Drehverriegelung dienenden Dichtung nicht überfordert.

Bevorzugt wird eine Ausgestaltung von Kappe und Radnabe, bei der die Zapfen an der Kappe und die korrespondierenden Führungen an dem Bund der Radnabe angeformt sind.

Bevorzugt wird weiterhin eine Ausführungsform, bei der die Dichtung fest mit der Kappe verbunden ist. In diesem Fall kann sich die Kappe aus sich im wesentlichen starr verhaltendem Kunststoff bestehen, und die Dichtung ist an dem die Öffnung der Kappe umgebenden Rand einstückig, vorzugsweise durch Mitextrusion, angeformt. Auf diese Weise lassen sich die Kappe einschließlich der daran angeformten Dichtung in einem einzigen Herstellungsschritt und damit preiswert herstellen, insbesondere bei hohen Produktionsstückzahlen. Auch ist zur Realisierung der Nebenabdeckung nur ein einziges Bauteil zu montieren.

In weiterer Ausgestaltung wird vorgeschlagen, daß die Dichtung an ihrer freien axialen Fläche mit einem aus der Fläche vorspringenden, umlaufenden Bund versehen ist, vorzugsweise einem Bund mit dreieckig spitz zulaufendem Querschnitt. Hierdurch wird eine besonders gute Abdichtung erzielt, insbesondere in solchen Fällen, in denen die an der Radnabe ausgebildete Dichtfläche vor dem Ansetzen und Verriegeln der Kappe nicht sorgfältig genug gereinigt wurde.

Um die Herstellung von Kappe und Dichtung in einem gemeinsamen Extrusionsprozeß zu vereinfachen und durch Vergrößern der Kontaktfläche die Verbindung zu verbessern, wird desweiteren vorgeschlagen, daß die Kappe im Bereich der Verbindung zur angeformten Dichtung dieselbe Querschnittsgestalt hat wie die Dichtung an deren freiem Ende.

In einer weiteren Ausgestaltung wird vorgeschlagen, daß der Verriegelungsabschnitt der Führung mit einer axialen Erweiterung versehen ist, die groß genug zur Aufnahme des Zapfens ist. Hierdurch soll in der Praxis immer wieder auftretenden Fällen vorgebeugt werden, in denen die Kappe plötzlich einem hohen axialen Druck ausgesetzt ist. Dies ist zum Beispiel dann der Fall, wenn beim Rangieren ein anderes Fahrzeug gegen die Kappe fährt und diese daher mit hohem Druck in Richtung auf die Achse beaufschlagt. Um bei leichteren Kollisionen Schäden an der Kappe oder an der Radnabe zu vermeiden, ist die beschriebene axiale Erweiterung, in die der Zapfen axial ohne zusätzliche Druckausübung eindringen kann, von Vorteil, da ein Abscheren der Zapfen verhindert wird.

Schließlich wird vorgeschlagen, daß Kappe und Bund der Radnabe jeweils mit Kennzeichnungen versehen sind, die zueinander weisen, wenn sich die Zapfen in den Verriegelungsabschnitten der Führungen befinden. Auf diese Weise ist jederzeit eine einfache optische Kontrolle des ordnungsgemäßen Sitzes der Kappe auf der Radnabe möglich.

Ein Ausführungsbeispiel der Erfindung ist in der nachfolgenden Beschreibung erläutert, wobei auf die Zeichnungen Bezug genommen wird. Darin zeigen:
- Fig. 1: einen Schnitt durch Achsschenkel und Radlager einer Nutzfahrzeug-Achse einschließlich der erfindungsgemäßen Nabenabdeckung;
- Fig. 2: in perspektivischer Ansicht die Kappe der Nabenabdeckung;
- Fig. 3: die Kappe nach Fig. 2 in einer Schnittdarstellung;
- Fig. 3a: eine Einzelheit der in Fig. 3 dargestellten Kappe im vergrößerten Maßstab;
- Fig. 4: eine Seitenansicht der Radnabe bei abgenommener Kappe und
- Fig. 5: die Einzelheit V der Fig. 4 in vergrößerter Darstellung.

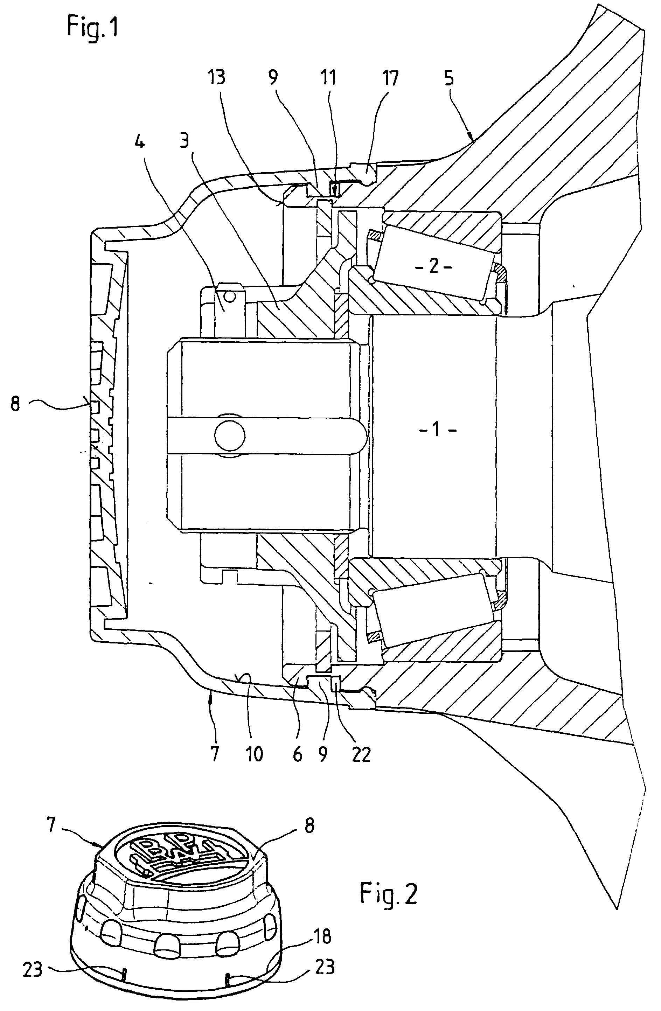

Fig. 1 zeigt in Übersichtsdarstellung das lagerseitige Ende einer Nutzfahrzeugachse und insbesondere der Achse eines gezogenen Fahrzeuges mit Achsschenkel 1, äußerem Wälzlager 2, der auf einem Gewinde des Achsschenkels 1 festgeschraubten Achsmutter 3 mit Sicherungsbolzen 4, ferner die auf dem Wälzlager 2 drehbar gelagerte Radnabe 5 der Achse. An ihrem äußeren, offenen Ende ist die Radnabe 5 mit einem umlaufenden Bund 6 versehen, auf den mittels einer nachfolgend noch näher beschriebenen Drehverriegelung eine Kappe 7 aufgesetzt ist. Die Kappe 7 ist, wie Fig. 2 erkennen läßt, auf ihrer Außenseite 8 mit einer Kennzeichnung z. B. des Achsenherstellers versehen. Im vorliegenden Fall besteht die Kappe 7 aus Polyamid.

Die Drehverriegelung zwischen Kappe 7 und Bund 6 der Radnabe 5 setzt sich zusammen aus zylindrischen Zapfen 9, die an der Innenfläche 10 der Kappe 7 angeformt sind, sowie Führungen 11 für die Zapfen, wobei die Führungen 11 in Gestalt von Nuten rund um den Bund 6 der Radnabe 5 herum angeordnet sind. Die Anzahl der Zapfen 9 sowie der korrespondierenden Führungen 11 beträgt beim Ausführungsbeispiel sechs. Jedoch ist ebenso eine größere oder geringere Anzahl möglich. Die Zapfen 9 sind zylindrisch gestaltet und unmittelbar, d. h. einstückig an der Kappe 7 aus Polyamid angeformt.

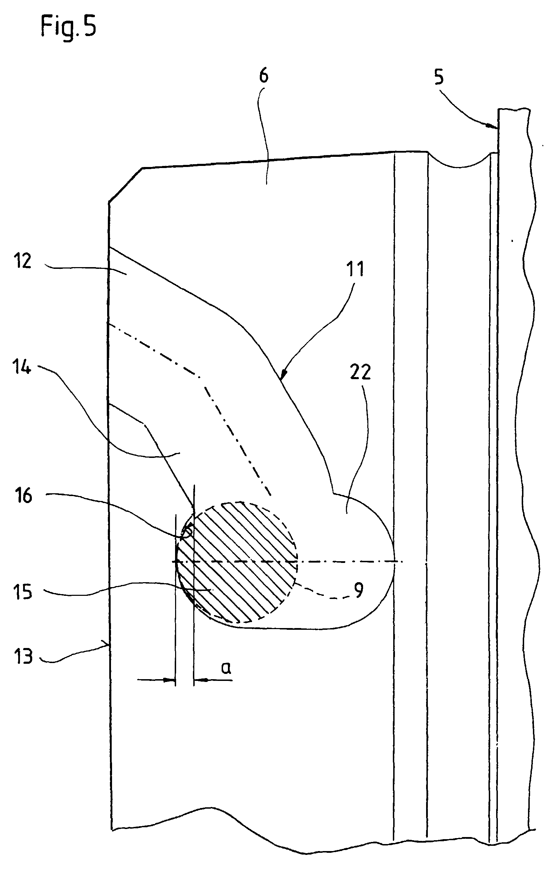

Die genaue Gestaltung der nutenförmigen Führungen für die Zapfen wird nachfolgend an der Detaildarstellung Fig. 5 erläutert. Jede Führung 11 setzt sich, ausgehend von einer Öffnung 12, die auf der freien Stirnfläche 13 des Bundes 6 mündet, aus zunächst einem Anzugsabschnitt 14 und einem sich daran anschließenden Verriegelungsabschnitt 15 zusammen. Der kanalförmige Anzugsabschnitt 14 ist breiter als der Durchmesser des Zapfens 9, um so dem Zapfen 9 ein widerstandsloses Hindurchgleiten zu ermöglichen. Der Verriegelungsabschnitt 15 ist mit einer zu der Stirnfläche 13 des Bundes hin gerichteten Hinterschneidung 16 versehen, deren Radius in etwa dem Radius des Zapfens 9 entspricht. In dieser Hinterschneidung 16 des Verriegelungsabschnittes 15 befindet sich der jeweilige Zapfen 9 nach der vollständigen Verriegelung der Bajonettverbindung. Da der Verriegelungsabschnitt 15 gegenüber dem Anzugsabschnitt 14 axial hinterschnitten ist, ist es zur Lösung der Bajonettverbindung zunächst erforderlich, den jeweiligen Zapfen 9 durch eine Bewegung mit axialer Komponente zunächst wieder aus dem Verriegelungsabschnitt 15 hinauszuführen, bis dieser in den Anzugsabschnitt 14 zurückgelangt und diesen dann schließlich über die Öffnung 12 verlassen kann.

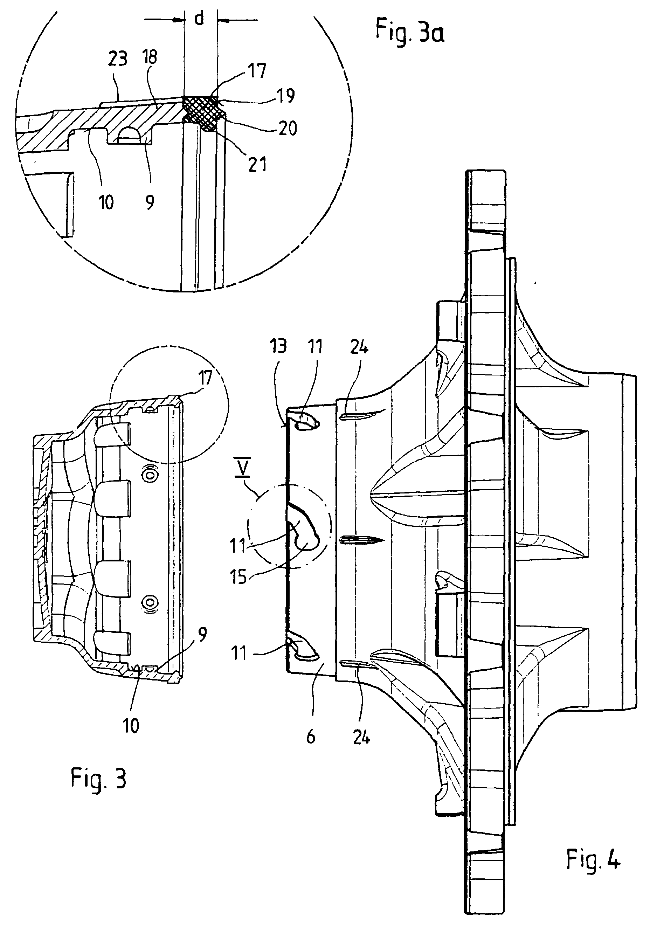

Damit der Zapfen 9 nicht von selbst die Hinterschneidung 16 des Verriegelungsabschnittes 15 verlassen kann, ist ein gewisser Druck erforderlich, mit dem der Zapfen 9 in Richtung auf die Stirnfläche 13 beaufschlagt wird. Dieser Druck wird durch eine elastische Dichtung 17 erzeugt, die sich zwischen einander zugewandten Flächen des Bundes 6 einerseits und der Kappe 7 andererseits erstreckt. Die Dichtung kann ein von Kappe und Radnabe getrenntes Bauteil sein. Beim Ausführungsbeispiel hingegen ist die Dichtung 17 Bestandteil der Kappe 7, wozu die Dichtung an dem die Öffnung der Kappe 7 umgebenden Rand 18 durch Mitextrusion einstückig angeformt ist. Wie insbesondere Figur 3 a erkennen läßt, ist die umlaufend gestaltete Dichtung 17 dem Rand 18 der Kappe 7 axial vorgesetzt, wobei die Dichtung an ihrer freien axialen Fläche 19 mit einem aus dieser Fläche 19 vorspringenden, umlaufenden Bund 20 versehen ist. Der Bund 20 weist einen dreieckig spitz zulaufenden Querschnitt auf. Ein weiterer Bund 21 der Dichtung mit im wesentlichen halbkreisförmigem Querschnitt befindet sich an der Innenseite der Dichtung 17. Die Kappe weist im Bereich ihrer Verbindung zu der mit angeformten Dichtung 17 dieselbe Querschnittsgestalt mit einem dreieckig spitz vorspringenden Bund auf, wie die Dichtung 17 an ihrem freien Ende mit dem dreieckig spitz zulaufenden Bund 20. Diese spezielle Gestaltung ist eine Folge des Extrusionsprozesses: Zunächst wird in dem Formwerkzeug die Kappe 7 selbst hergestellt, wozu Polyamid unter hohem Druck in die Form eingespritzt wird. Nachdem das Material überwiegend erstarrt ist, wird der Formraum im Bereich des Randes 18 der Kappe 7 axial erweitert, wozu die dortige Formfläche um einige Millimeter axial versetzt wird. In den sich hierdurch ergebenden, zusätzlichen Formraum, wird sodann ein weicherer Kunststoff eingespritzt, der dann die elastische Dichtung 17 bildet. Ein geeigneter Werkstoff für diesen zweiten Extrusionsprozeß ist ein Thermoplast wie z. B. TPU, welches sich durch ein sehr gutes elastisches Rückformverhalten auszeichnet. Diese Rückformung ist von großer Bedeutung, da die Dichtung 17 nicht nur der Abdichtung der Kappe 7 gegenüber der Radnabe 5 dient, sondern die Dichtung in Folge ihrer Elastizität auch jenen Axialdruck erzeugt, der zur Verriegelung der Zapfen 9 in den Verriegelungsabschnitten 15 der Führungen 11 erforderlich ist. Denn dieser dauernde axiale Druck sichert die Bajonettverbindung gegen ein ungewolltes Lösen in Folge z. B. im Fahrbetrieb auftretender Stöße auf die Fahrzeugachse. Für die beschriebene Doppelfunktion der Dichtung 17 ist von Bedeutung, daß das in Fig. 5 eingezeichnete axiale Maß a des Hinterschnitts 16 gegenüber dem Anzugsabschnitt 14 geringer ist, als jene axiale Länge, über die sich die Dichtung 17 bei axialer Kompression noch elastisch verhält. Aus diesem Grund sollte die in Fig. 3 a eingetragene Dicke d der Dichtung 3 bis 10 mm, vorzugsweise ca. 7 mm betragen.

Fig. 5 läßt außerdem erkennen, daß der Verriegelungsabschnitt 15 der Führung 11 mit einer axialen Erweiterung 22 versehen ist, die groß genug zur Aufnahme des Zapfens 9 ist. In die axiale Erweiterung 22 kann der jeweilige Zapfen 9 dann eintreten, wenn auf die Kappe 7 ein sehr starker, die elastische Aufnahmefähigkeit der Dichtung übersteigender Druck ausgeübt wird. Auf diese Weise wird ein Abscheren des Zapfens 9 und damit eine Zerstörung der Kappe 7 vermieden.

Kappe 7 und Bund 6 der Radnabe 5 sind jeweils mit den Kennzeichnungen 23, 24 versehen. Die Kennzeichnungen 23, 24 weisen zueinander, wenn sich die Zapfen in den Verriegelungsabschnitten der Führungen befinden, die Kappe also ordnungsgemäß auf der Radnabe befestigt ist. Auf diese Weise ist eine einfache optische Kontrolle des richtigen Sitzes möglich.

### Bezugszeichenliste

- 1: Achsschenkel
- 2: äußeres Wälzlager
- 3: Achsmutter
- 4: Sicherungsbolzen
- 5: Radnabe
- 6: Bund der Radnabe
- 7: Kappe
- 8: Außenseite
- 9: Zapfen
- 10: Innenfläche
- 11: Führung
- 12: Öffnung
- 13: Stirnfläche
- 14: Anzugsabschnitt
- 15: Verriegelungsabschnitt
- 16: Hinterschnitt
- 17: Dichtung
- 18: Rand
- 19: Fläche
- 20: Bund
- 21: Bund
- 22: axiale Erweiterung
- 23: Kennzeichnung
- 24: Kennzeichnung
- a: axiales Maß
- d: Dicke der Dichtung

## Patentansprüche

1. Nabenabdeckung für eine Radlagerung, vorzugsweise für eine Nutzfahrzeug-Radlagerung, mit einer das offene Ende der Radnabe (5) sowie das Ende des Achsschenkels (1) mit der darauf befestigten zentralen Achsmutter (3) nach außen hin abdeckenden und hierzu an einem umlaufenden Bund (6) der Radnabe (5) durch Drehen befestigten Kappe (7),
**dadurch gekennzeichnet,**
daß die Kappe (7) mittels einer Bajonettverbindung (9, 11) an dem umlaufenden Bund (6) der Radnabe (5) befestigt ist.

2. Nabenabdeckung nach Anspruch 1, gekennzeichnet durch eine sich einerseits an dem Bund (6) und andererseits an der Kappe (7) abstützende Dichtung (17) aus elastischem Material.

3. Nabenabdeckung nach Anspruch 2, dadurch gekennzeichnet, daß sich die Dichtung (17) axial druckbeaufschlagt zwischen einander zugewandten Flächen des Bundes (6) einerseits und der Kappe (7) andererseits erstreckt, und daß der axiale Druck durch den Formschluß der Bajonettverbindung (9, 11) aufrechterhalten wird.

4. Nabenabdeckung nach Anspruch 2 oder 3, dadurch gekennzeichnet, daß die Bajonettverbindung (9, 11) durch die elastische Rückformkraft der axial druckbeaufschlagten Dichtung (17) gegen ein ungewolltes Lösen gesichert ist.

5. Nabenabdeckung nach einem der Ansprüche 1 bis 4, dadurch gekennzeichnet, daß sich die Bajonettverbindung aus einerseits Zapfen (9) und andererseits Führungen (11) für die Zapfen zusammensetzt, und daß sich jede Führung (11), ausgehend von einer Öffnung (12), aus einem während der Drehung der Kappe (7) von dem jeweiligen Zapfen (9) durchlaufenen Anzugsabschnitt (14) sowie einem sich daran anschließenden Verriegelungsabschnitt (15) zusammensetzt, der den Zapfen (9) in der Endstellung der Kappe (7) aufnimmt, und daß der Verriegelungsabschnitt (15) gegenüber dem Anzugsabschnitt (14) axial hinterschnitten ist.

6. Nabenabdeckung nach Anspruch 5, dadurch gekennzeichnet, daß das axiale Maß (a) des Hinterschnitts (16) des Verriegelungsabschnittes (15) gegenüber dem Anzugsabschnitt (14) geringer ist, als jene axiale Länge, über die sich die Dichtung (17) bei axialer Kompression elastisch verhält.

7. Nabenabdeckung nach Anspruch 5 oder Anspruch 6, dadurch gekennzeichnet, daß die Zapfen (9) an der Kappe (7) und daß die korrespondierenden Führungen (11) an dem Bund (6) der Radnabe (5) angeformt sind.

8. Nabenabdeckung nach einem der Ansprüche 2 bis 7, dadurch gekennzeichnet, daß die Dichtung (17) fest mit der Kappe (7) verbunden ist.

9. Nabenabdeckung nach Anspruch 8, dadurch gekennzeichnet, daß die Kappe aus sich im wesentlichen starr verhaltendem Kunststoff besteht, und daß die Dichtung (17) an dem die Öffnung der Kappe (7) umgebenden Rand (18) einstückig, vorzugsweise durch Mitextrusion, angeformt ist.

10. Nabenabdeckung nach einem der Ansprüche 2 bis 9, dadurch gekennzeichnet, daß die Dichtung (17) an ihrer freien axialen Fläche (19) mit einem aus der Fläche (19) vorspringenden, umlaufenden Bund (20) versehen ist, vorzugsweise einem Bund mit dreieckig spitz zulaufendem Querschnitt.

11. Nabenabdeckung nach Anspruch 10, dadurch gekennzeichnet, daß die Kappe (7) im Bereich der Verbindung zur angeformten Dichtung (17) dieselbe Querschnittsgestalt hat wie die Dichtung (17) an deren freiem Ende.

12. Nabenabdeckung nach einem der Ansprüche 5 bis 11, dadurch gekennzeichnet, daß der Verriegelungsabschnitt (15) der Führung (11) mit einer axialen Erweiterung (22) versehen ist, die groß genug zur Aufnahme des Zapfens (9) ist.

13. Nabenabdeckung nach einem der Ansprüche 5 bis 12, dadurch gekennzeichnet, daß Kappe (7) und Bund (6) der Radnabe (5) jeweils mit Kennzeichnungen (23 bzw. 24) versehen sind, die zueinander weisen, wenn sich die Zapfen (9) in den Verriegelungsabschnitten (15) der Führungen (11) befinden.
